# EUROPÄISCHE PATENTSCHRIFT

(11) **EP 3 245 457 B1**
(45) Veröffentlichungstag und Bekanntmachung des Hinweises auf die Patenterteilung: **24.04.2024**
(21) Anmeldenummer: 16711118.6
(22) Anmeldetag: 15.01.2016
(51) Int. Cl.: F24S 25/632, F24S 25/30, F24S 25/40, H02S 40/36, H02S 40/34, H02S 20/25

(54) **SOLARDACHPLATTENSYSTEM**
SOLAR ROOF TILE SYSTEM
SYSTÈME DE PLAQUES DE TOITURE SOLAIRE

(30) Priorität: 16.01.2015 DE 202015000200 U
(43) Veröffentlichungstag der Anmeldung: 22.11.2017
(73) Patentinhaber: Sigma Energy Systems GmbH, 76661 Philippsburg (DE)
(72) Erfinder: WERNER, Eberhard, 88433 Schemmerhofen (DE); SCHMIDT, Agathe, 76676 Graben-Neudorf (DE); SCHMIDT, Josef, 76676 Graben-Neudorf (DE)
(74) Vertreter: Hentrich Patent- & Rechtsanwaltspartnerschaft mbB
(86) Internationale Anmeldenummer: PCT/DE2016/100020
(87) Internationale Veröffentlichungsnummer: WO 2016/112899

(56) Entgegenhaltungen:
- EP-A1- 2 442 371
- EP-A1- 2 442 371
- EP-A2- 2 348 542
- US-A- 5 497 587
- US-A1- 2014 366 464
- US-B1- 8 776 456

## Beschreibung

Die Erfindung betrifft ein Solardachplattensystem zur Verlegung auf einer geneigten Fläche, vorzugsweise auf einem einen Dachfirst und eine Dachtraufe aufweisenden Dach, mit mindestens zwei eine Oberseite und eine Unterseite aufweisenden Dachplatten und mit einem sich über die Oberseiten der Dachplatten erstreckenden und an diesem befestigbaren Solarmodul.

Derartige Systeme sind aus der Praxis hinreichend bekannt, wobei Träger (Querträger und Längsträger) auf regulären Dachplatten, auch Dachsteinen oder Dachziegeln aufgebracht werden. An diesen Trägern werden dann die Solarmodule befestigt. Die Träger mit den Modulen bauen das Dach damit zusätzlich auf und durch Verschraubungen können undichte Stellen am Dach auftreten, die nachfolgend wieder einen erhöhten Abdichtungsaufwand erfordern.

Die US 8 776 456 B1 schlägt ein Trägersystem für Solarmodule vor, das mit den Dachplatten verschraubt wird, wobei also eine unerwünschte Durchdringung der Dachhaut vorliegt.

Die US 2014 / 0366464 A1 beschreibt ein dachintegriertes System von Solarmodulen, wobei auch hier die die Solarmodule umrahmenden Trägerteile mittels einer Schraube mit den Dachplatten verschraubt werden.

In der US 5 497 587 A wird eine Profilschiene für ein Solardachplattensystem beschrieben, die zur Verbindung von mindestens zwei Dachplatten geeignet ist.

In der EP 2 442 371 A1 wird eine Dachplatte für ein Solardachplattensystem beschrieben, Hierbei wird das Solarmodul mithilfe eines Anschlags positionsgenau ausgerichtet.

Es ist daher die Aufgabe der Erfindung, ein Solardachplattensystem der eingangs genannten Art bereit zu stellen, die die vorstehend genannten Nachteile überwinden.

Diese Aufgabe wird mit einem Solardachplattensystem gemäß Anspruch 1 gelöst. Dabei ist eine die Dachplatten miteinander verbindende Profilschiene vorgesehen, welche mindestens eine Modulaufnahme zur Aufnahme einer Kante des Solarmoduls, vorzugsweise einer der Dachtraufe oder dem Dachfirst zugewandten Kante des Solarmoduls aufweist.

Durch den Einsatz einer Profilschiene ist einerseits gewährleistet, dass diese die Dachdachplatten miteinander fest verbindet, wodurch eine starke Unterkonstruktion für die Auflage eines Solarmoduls geschaffen ist. Andererseits ist durch die Profilschiene das Solarmodul sicher an den Dachplatten, d.h. an den Grundkörpern oder auch Dachsteinen fixiert. Die Profilschiene dient also als multifunktionales Bauteil, das dem System an der der Dachtraufe oder dem Dachfirst zuwandten Seite des Solardachpplattensystems zusätzlich eine steife Kante bietet.

Es ist besonders vorteilhaft, dass das Solardachplattensystem als dachintegriertes System geformt sein kann. Ferner ist das System verklebungsfrei und beweglich, so dass Materialspannungen wesentlich verringert oder sogar ganz vermieden werden. Des Weiteren erfüllt das Solardachplattensystem durch den Einsatz der Profilschiene die Anforderungen der Norm für die Beanspruchung von Bedachungen durch Feuer von außen (EN 1187 / Flugfeuerschutzprüfung).

Um die Dachplatten sicher miteinander verbinden zu können, weist die Profilschiene mindestens eine Dachplattenaufnahme zur Aufnahme von mindestens einer der Dachplatten auf.

Die mindestens eine Dachplattenaufnahme ist als eine Profilklammer gebildet, wobei die Dachplatten einen von der Profilkammer ergreifbaren Klammerabschnitt aufweisen. Hierdurch ist die Montage des Solardachplattensystems stark vereinfacht, da die Profilschiene lediglich wie ein Clip, bzw. wie eine Federklemme eingesetzt werden kann.

Um die Montage des Solarmoduls bzw. einer Kante des Solarmoduls in die Modulaufnahme zu vereinfachen, ist die Modulaufnahme aus einem Auflageabschnitt und einem Bügelabschnitt gebildet.

Zur Materialeinsparung ist es dabei vorteilhaft, wenn der Auflageabschnitt der mindestens einen Modulaufnahme einteilig mit der Profilklammer und damit einteilig mit der Dachplattenaufnahme gebildet ist. Die Steifigkeit des Solardachplattensystems wird zusätzlich erhöht, wenn eine zur Anzahl an Dachplatten korrespondierende Anzahl an Dachplattenaufnahmen vorgesehen ist.

Es ist weiterhin von Vorteil, wenn mindestens eine Klemme vorgesehen ist zur Sicherung einer der Profilschiene abgewandten Kante des Solarmoduls an mindestens einer der Dachplatten. Dadurch wird das Solarmodul zusätzlich an den Dachplatten gesichert.

Um wiederum eine feste Verbindung zwischen der Klemme und der Dachplatte herstellen zu können, hat es sich als bevorzugt gezeigt, wenn an der Oberseite von mindestens einer der Dachplatten mindestens eine Klemmenaufnahme angeordnet ist zur Sicherung der mindestens einen Klemme an einer der Dachplatten.

Eine weitere bevorzugte Ausführungsform sieht vor, dass die Klemme einen in der Klemmenaufnahme gesicherten Dachplattenabschnitt und einem mit dem Solarmodul wechselwirkenden Modulabschnitt aufweist. Die Klemme kann hierbei aus einem Federstahl gebildet sein, vorzugsweise aus einem federnden Edelstahl. Der Modulabschnitt sichert das Solarmodul unter Federvorspannung an der Dachplatte. Um die Montage zu erleichtern, hat es sich dabei als sinnvoll erwiesen, wenn der Dachplattenabschnitt der Klemme mittels einer Pressverbindung in der Klemmenaufnahme gesichert ist.

Um die Klemme auf einfache Weise, z. B. in einem Biegestanzverfahren herstellen zu können, ist es vorteilhaft, wenn die Klemme im Querschnitt z-förmig oder stufenförmig gebildet ist mit einem den Dachplattenabschnitt und den Modulabschnitt verbindenden Steg.

Es sich als bevorzugt gezeigt, wenn mindestens einer der Dachplatten an seinem durch das Solarmodul nicht bedeckten Bereich mindestens ein Führungsglied aufweist. Damit ist sichergestellt, dass die Solardachplattensysteme in entsprechender Weise zueinander ausgerichtet sind und kein Solardachplattensystem die Solarzellen des anderen bedeckt. Dabei ist es von Vorteil, wenn die Dachplatten, bzw. Dachsteine an ihrer Unterseite mindestens eine Führungsaufnahme zur Aufnahme des Führungsglieds der nächst tiefer angeordneten Dachplatte aufweisen.

Die Profilschiene umfasst eine aus einem Bügelabschnitt und einem Auflageabschnitt gebildete Modulaufnahme zur Aufnahme einer Kante eines Solarmoduls und mindestens eine als eine Profilklammer mit mehreren Abkantungen gebildete Dachplattenaufnahme. Bevorzugt ist die Profilschiene aus einem rostfreien bzw. korrosionsbeständigen Material (so z.B. Kunststoff), vorzugsweise aus einem federnden Edelstahl gebildet.

Im Folgenden soll die Erfindung anhand eines Ausführungsbeispiels näher erläutert werden; es zeigen:
- Fig. 1: eine Draufsicht auf ein Solardachplattensystem,
- Fig. 2: eine Explosionsansicht des Systems nach Figur 1,
- Fig. 3: eine weitere Explosionsansicht des Systems nach Figur 1,
- Fig. 4: den Schnitt IV-IV aus Figur 1,
- Fig. 5a, 5b: Ansichten der Profilschiene,
- Fig. 6: das Detail A aus Figur 4,
- Fig. 7: den Schnitt VII-VII aus Figur 1,
- Fig. 8: eine Dachplatte (bzw. einen Grundkörper) zur Verwendung mit dem Solardachplattesystem gemäß Figur 1,
- Fig. 9: eine Unteransicht der Solardachplatte gemäß Figur 8, und
- Fig. 10: eine Anordnung aus mehreren Solardachplattensystemen.

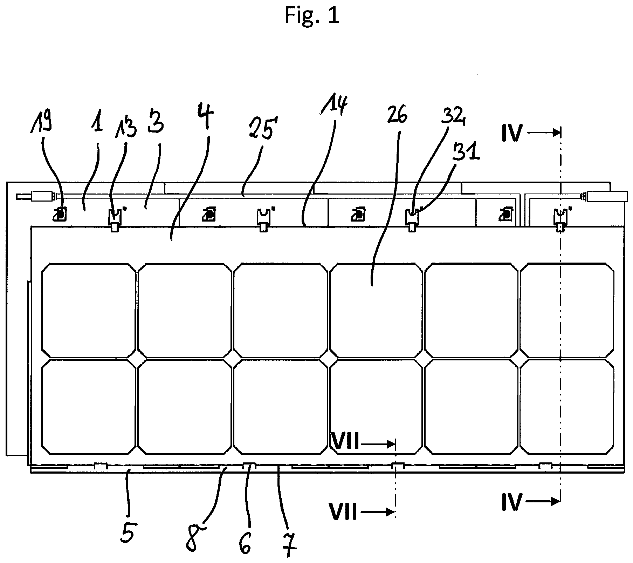

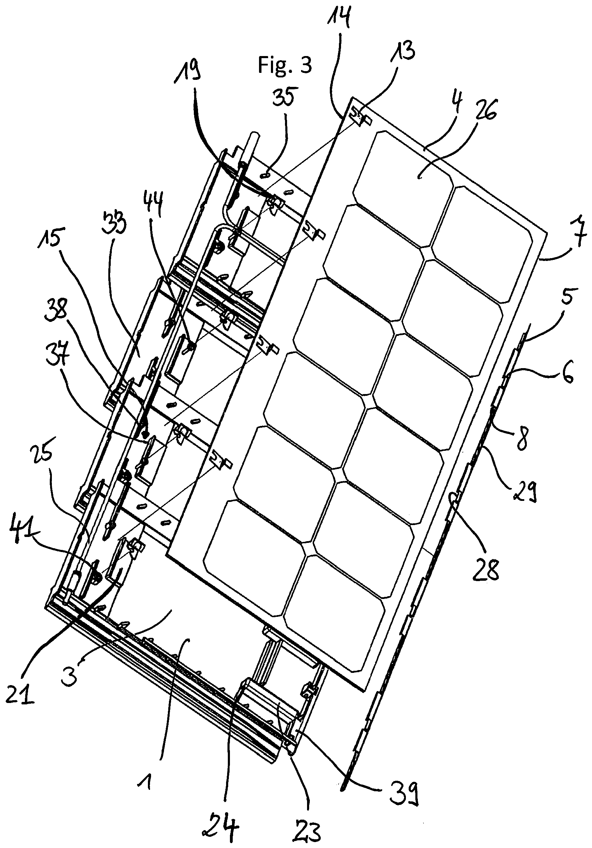

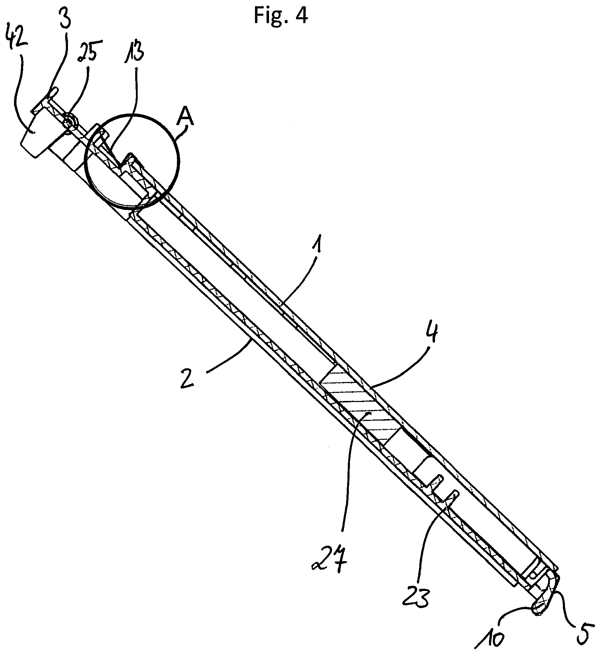

In den Figuren 1 bis 4 ist ein Solardachplattensystem gezeigt zur Verlegung auf einer geneigten Fläche, vorzugsweise auf einem einen Dachfirst und eine Dachtraufe aufweisenden Dach, mit mindestens zwei eine Oberseite 1 und eine Unterseite 2 aufweisenden Dachplatten 3 und mit einem sich über die Oberseiten 1 der Dachplatten 3 erstreckenden und an diesen befestigbaren Solarmodul 4.

Zur Verbindung der Dachplatten 3 ist eine Profilschiene 5 vorgesehen, die eine Modulaufnahme 6 zur Aufnahme einer der Dachtraufe zugewandten Kante 7 des Solarmoduls 4 aufweist. Im gezeigten Ausführungsbeispiel sind genau vier der Dachplatten 3 vorgesehen, die durch die Profilschiene 5 miteinander verbunden sind. Selbstverständlich können auch mehr oder weniger als vier Dachplatten 3 bei einem erfindungsgemäßen Solardachplattensystem Einsatz finden.

Ferner sind mehrere, im gezeigten Ausführungsbeispiel insgesamt genau vier Klemmen 13 zu erkennen, die das Solarmodul 4 auf seiner der Profilschiene 5 abgewandten Seite (Kante 14) an den Dachplatten 3 sichern. Es sind außerdem Verbindungsleitungen 25 gezeigt, die eine oder mehrere elektrische Verbindungen zu Solarmodulen 4 benachbarter Solardachplattensysteme bzw. zu elektrischen Speichern ausbilden. Das Solarmodul 4 besitzt mehrere Solarzellen 26 und ist ansonsten in für den Fachmann bekannter Weise gebildet.

Die Dachplatten 3 des erfindungsgemäßen Solardachplattensystems sind derart gebildet, dass das gesamte Dachplattensystem - sofern bereits ein Solarmodul 4 befestigt ist - mit den übrigen (nicht bedeckten) Dachziegeln bzw. Dachsteinen oder Dachplatten eine ebene Dachstruktur ausformen, bei der das oder die Solarmodule 4 nicht über eine ebene Grundfläche hinausragen. Mit anderen Worten bilden die übrigen Dachziegel/ Dachsteine mit dem Solarmodul 4 des Solardachplattensystems eine ebene Fläche aus, womit ein dachintegriertes System geschaffen ist.

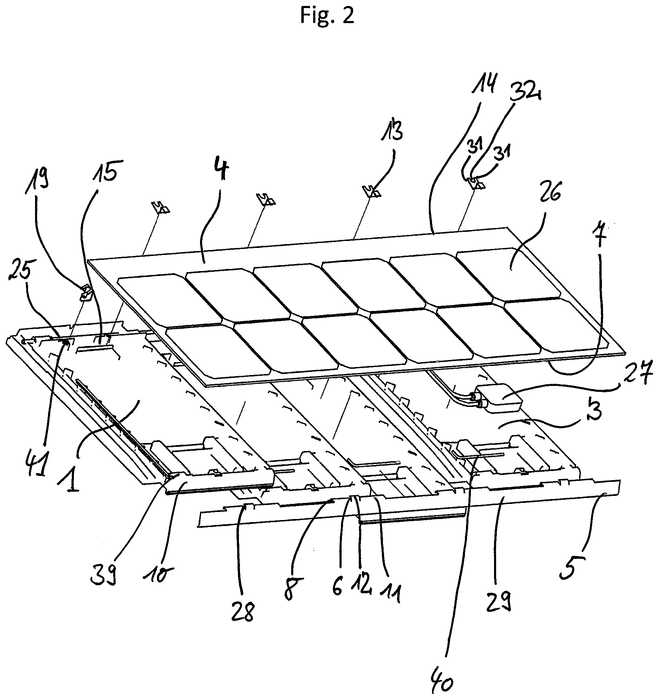

Aus Fig. 2 wird ersichtlich, dass dem Solarmodul 4 ein Anschlussblock 27 zugeordnet ist, mit dem die Verbindungsleitungen 25 verbunden sind. Dieser Anschlussblock 27 befindet sich auf der Oberseite 1 der Dachplatten 3, so dass keine gesonderte Durchdringung für die Verbindungsleitungen 25 durch die Dachplatte 3 selbst vorgesehen sein muss. Des Weiteren ist auch bei dem Solardachplattensystem keine Durchdringung der Dachhaut oder der Isolation des Daches notwendig, so dass das System besonders dicht hinsichtlich auftreffender Flüssigkeit ist.

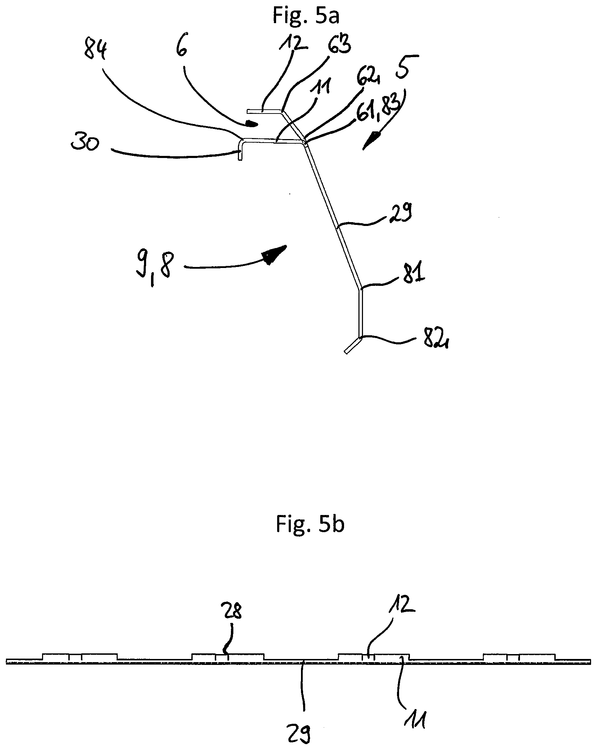

Nachfolgend soll der Aufbau der Profilschiene 5 anhand der Figuren 5a und 5b näher erläutert werden. In der Seitenansicht (Fig. 5a) der Profilschiene 5 ist zu erkennen, dass diese über eine Modulaufnahme 6 verfügt, die aus einem Bügelabschnitt 12 und einem Auflageabschnitt 11 gebildet ist. Im vorliegenden Ausführungsbeispiel sind genau vier der Modulaufnahmen 6 an der Profilschiene 5 angeordnet, wobei eine andere Anzahl an Modulaufnahmen 6, z. B. drei oder auch fünf Modulaufnahmen 6 möglich ist. Die Profilschiene 5 ist aus einem gekanteten Blech geformt, wobei die Modulaufnahme 6 derart gestaltet ist, dass der Auflageabschnitt 11 links- und rechtseitig des Bügelabschnitts 12 angeordnet ist. Im Bereich des Bügelabschnitts 12 weist der Auflageabschnitt 11 also eine Ausnehmung 28 auf zur Materialeinsparung. Aus dem Material dieser Ausnehmung 28 ist vorzugsweise der Bügelabschnitt 12 geformt. Die Profilschiene 5 bzw. Profilleiste verfügt ferner über eine Grundstrebe 29, die sich entlang der kompletten Profilschiene 29 erstreckt und die der Profilschiene 29 zusätzliche Stabilität verleiht. An diese Grundstrebe 29 schließt sich auf der dem Solarmodul 4 zugewandten Seite die Modulaufnahme 6 an, wobei der Auflageabschnitt 11 gegenüber der Grundstrebe 29 eine Abkantung 61 von zwischen 60 Grad und 80 Grad, vorzugsweise von genau 67,5 Grad aufweist. Der Bügelabschnitt 12 weist gegenüber der Grundstrebe 29 eine Abkantung 62 von 10 Grad bis 20 Grad, vorzugsweise genau 16 Grad auf. Ferner besitzt der Bügelabschnitt 12 eine weitere Abkantung 63 von zwischen 45 Grad bis 60 Grad, vorzugsweise genau 53 Grad.

Aus Fig. 5a lässt sich weiterhin entnehmen, dass die Dachplattenaufnahme 8 als eine Profilklammer 9 gebildet ist, die einen Klammerabschnitt 10 der Dachplatte 3 umgreifen kann. Die Dachplattenaufnahme 8 ist mit mehreren Abkantungen geformt, wobei eine erste Abkantung 81 an der dem Solarmodul 4 abgewandten Seite der Grundstrebe 29 angeordnet ist, die um einen Winkel zwischen 18 Grad und 25 Grad, vorzugsweise um genau 21 Grad gebogen ist. An diese erste Abkantung 81 schließt sich eine weitere Abkantung 82 an, die um einen Winkel von 40 Grad bis 60 Grad, vorzugsweise um genau 47 Grad gebogen ist. Auf der dem Solarmodul 4 zugewandten Seite der Grundstrebe 29 ist eine Abkantung 83 vorgesehen, die zwischen 60 Grad und 80 Grad, vorzugsweise um genau 67,5 Grad abgewinkelt ist. Ferner schließt sich ein Sicherungsabschnitt 30 in Form einer weiteren Abkantung 84 an, der dem Hintergreifen hinter die Klammerabschnitte 10 der Dachplatten 3 dient. Dadurch kann die Profilschiene 5 sicher an der Dachplatte 3 befestigt werden. Der Sicherungsabschnitt 30 ist vorzugsweise um 90 Grad abgewinkelt. Sowohl die Modulaufnahme 6 als auch die Dachplattenaufnahme 8 können in einer bevorzugten Ausführungsform eine Federklemme bilden, um mehrere Bauteile miteinander zu verbinden.

Aus der Draufsicht gemäß Fig. 5b ist des Weiteren zu erkennen, dass in dem gezeigten Ausführungsbeispiel die Anzahl an Modulaufnahmen 6 der Anzahl an Dachplattenaufnahmen 8 entspricht.

In Figur 1 bis 3 ist wiederum zu erkennen, dass ferner die Anzahl der Dachplatten 3 mit der Anzahl an Dachplattenaufnahmen 8 und/oder der Anzahl an Modulaufnahmen 6 korrespondiert. Im gezeigten Ausführungsbeispiel sind dementsprechend genau vier der Dachplatten 3 und genau vier der Dachplattenaufnahmen 8 vorhanden. In einer alternativen Ausführungsform ist vorgesehen, dass sich eine Dachplattenaufnahme 8 entlang der Länge der Profilschiene zumindest teilweise erstreckt und diese einzelne Dachplattenaufnahme 8 mehrere z. B. zwei der Dachplatten 3 umklammert.

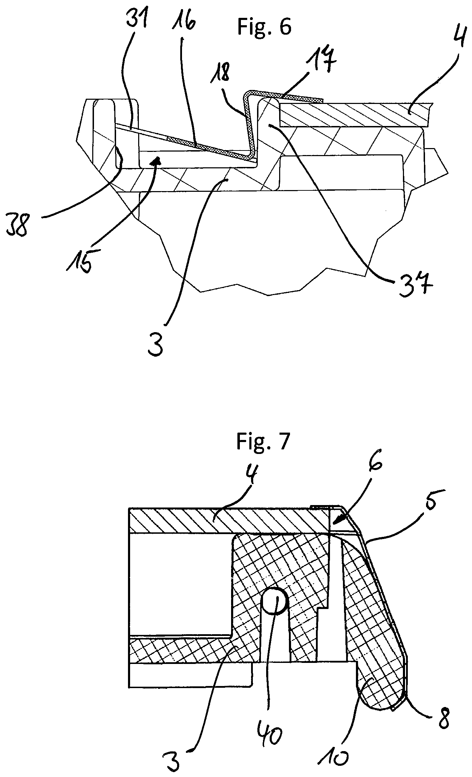

Zur weiteren bzw. zusätzlichen Sicherung des Solarmoduls 4 an den Dachplatten 3 sind mehrere Klemmen 13 vorgesehen, die auf einer der Profilschiene 5 abgewandten Seite des Solarmoduls 4 angeordnet sind. Aus Fig. 6 wird ersichtlich, dass die Klemmen 13 in einer Klemmenaufnahme 15 der Dachplatte 3 gesichert sind und einen Dachplattenabschnitt 16, einen Modulabschnitt 17 und einen die beiden Abschnitte verbindenden Steg 18 aufweisen. Um die Montage des Gesamtsystems zu vereinfachen, ist der Dachplattenabschnitt 16 in Form einer Pressverbindung in der Klemmenaufnahme 15 gesichert. Die Klemme 13 ist im bevorzugten Ausführungsbeispiel im Querschnitt z-förmig gebildet. Aus Fig. 2 wird dabei ersichtlich, dass diese Klemmverbindung durch zwei Klemmlappen 31 an den Klemmen 13 gebildet ist. Mit anderen Worten weißt die Klemme 13 also an ihrem Dachplattenabschnitt 16 eine Ausnehmung 32 auf, wodurch die zwei elastischen Klemmlappen 31 entstehen.

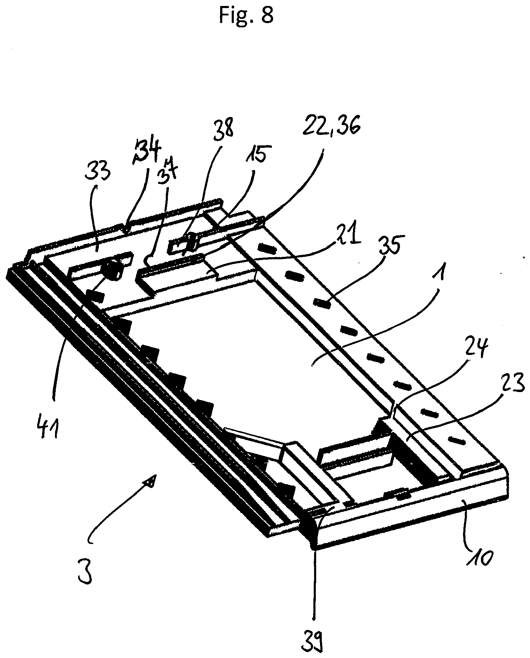

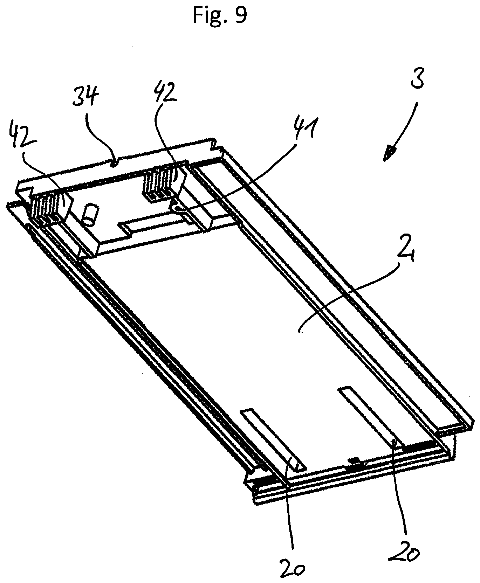

Nachfolgend soll der Aufbau der Dachplatten 3 des Solardachplattensystems anhand der Figuren 8 und 9 näher erläutert werden. Die Dachplatten 3 sind dabei vorzugsweise aus einem gut wärmeleitenden Material, wie einem Kunststoff, einem Polymerbeton oder aus Glas gebildet. Besonders bevorzugt sind die Dachplatten 3 jedoch ganz oder teilweise aus einem PP/PE mit einem mineralischen Füllstoff gebildet.

Zur Führung der Verbindungsleitungen 25 weißt die Dachplatte 3 eine Kabelführung 33 bzw. einen Kabelkanal auf, der im Wesentlichen parallel zur Dachlattung, dem Dachfirst oder der Dachtraufe angeordnet ist. Ferner weist die Dachplatte 3 einen Kabeldurchtritt 34 für die längsseitige Durchführung von Verbindungsleitungen 25 auf.

In Fig. 8 ist die Oberseite 1 der Dachplatte 3 zu erkennen, wobei an der Oberseite 1 ein Auflageblock 21, sowie eine Auflagestruktur 23 zur Auflage eines Solarmoduls 4 ausgebildet sind. Des Weiteren weist die Dachplatte 3 Stützelemente 35 bzw. Nocken auf, die bei Bedarf aus einem die Reibung erhöhenden Material gebildet sind, so dass ein aufgelegtes Solarmodul 4 nicht von der Dachplatte 3 rutschen kann. Die Auflagestruktur 23 umfasst ferner, vorzugsweise trichterförmig angeordnete Führungsstreben 24, durch die eintretendes Wasser abgeleitet werden kann. Des Weiteren kann durch diese Auflagestruktur 23 Luft besonders gut geführt werden, so dass Wärmestaus vermieden werden. Der Auflageblock 21 sieht ferner ein Anschlagglied 22 bzw. einen sich erstreckenden Anschlagsteg 36 vor, an dem das Solarmodul 4 angelegt werden kann, bevor die Profilschiene 5 klemmend an der der Dachtraufe zugewandten Kante 7 des Solarmoduls 4 und dem Klammerabschnitt 10 der Dachplatte 3 fixiert wird. Des Weiteren ist die Klemmenaufnahme 15 zu erkennen, die im gezeigten Ausführungsbeispiel durch die Wandung 37 des Anschlaggliedes 22 und einem Dachplattenstegabschnitt 38 gebildet ist.

Ferner verfügt die Dachplatte 3 über eine Buchse 39 mit einer Führungshülse, so dass in diese Buchse 39 ein Sicherungsstift 40 eingetrieben werden kann, um zwei benachbarte Dachplatten 3 mittels des Sicherungsstiftes 40 miteinander zusätzlich zu verbinden. Die Dachplatte 3 weist ferner einen Durchtritt 41 auf, über den die Dachplatte 3 mit der Dachlattung gekoppelt, vorzugsweise verschraubt werden kann. Dieser Durchtritt 41 kann gleichzeitig auch als eine Gewindebuchse ausgeführt sein, über die die Führungsglieder 19 mit den Dachplatten 3 gekoppelt bzw. verschraubt werden können.

In Fig. 9 ist eine Unteransicht bzw. eine Ansicht der Unterseite 2 der Dachplatte 3 gezeigt, wobei die Dachplatte 3 im gezeigten Ausführungsbeispiel genau zwei Führungsaufnahmen 20 zur Aufnahme eines Führungsgliedes 19 aufweist. Ferner sind Füße 42 zum Einhängen der Dachplatten 3 in eine Dachlattung vorgesehen.

Aus Fig. 8 und 9 wird ersichtlich, dass die Dachplatte 3 als ein Falzziegel gebildet ist. Im gezeigten Ausführungsbeispiel ist die Dachplatte 3 in einer Linksdeckung, d. h. von rechts nach links verlegt, anzubringen.

Nachfolgend soll erläutert werden, wie die Montage des Solardachplattensystems erfolgt. Hierzu werden zunächst vier der Dachplatten 3 in Linksdeckung miteinander gekoppelt und ggfs. mit Sicherungsstiften 40 miteinander verbunden. Auf die dem Dachfirst abgewandten Seite der Dachplatten 3 wird die Profilschiene 5 aufgepresst, so dass die Dachplattenaufnahmen 8 die Klammerabschnitte 10 der Dachplatten 3 fest umgreifen. Nun kann der Anschlussblock 27 auf der Oberseite 1 einer der Dachplatten 3 angebracht werden, wonach anschließend das Solarmodul 4 in die Modulaufnahmen 6 der Profilschiene 5 eingelegt wird. Auf seiner der Profilschiene 5 abgewandten Seite liegt das Solarmodul 4 auf dem Auflageblock 21 auf und ist am Anschlagsteg 36 der Dachplatten 3 angelegt. Zur zusätzlichen Sicherung des Solarmoduls 4 werden nun die Klemmen 13 in die Klemmenaufnahmen 15 eingepresst, wonach die Modulabschnitte 17 der Klemmen 13 das Solarmodul 4 zusätzlich an der Dachplatte 3 sichern. Außerdem werden die Verbindungsleitungen 25 entlang der Kabelführungen 33 verlegt und mit den daneben liegenden Solardachplattensystemen gekoppelt. Für eine sichere Verbindung werden die Verbindungsleitungen 25 mittels Schraubverbindungen miteinander gekoppelt. Gemäß einer alternativen Ausführungsform ist hierbei ein Bajonettverschluss vorgesehen. Zuletzt werden die Führungsglieder 19 an den einzelnen Dachplatten 3 angebracht, die in die Führungsaufnahmen 20 von nächsthöherliegenden, d.h. in Richtung des Firstes angeordneten Solardachplatten eingreifen können.

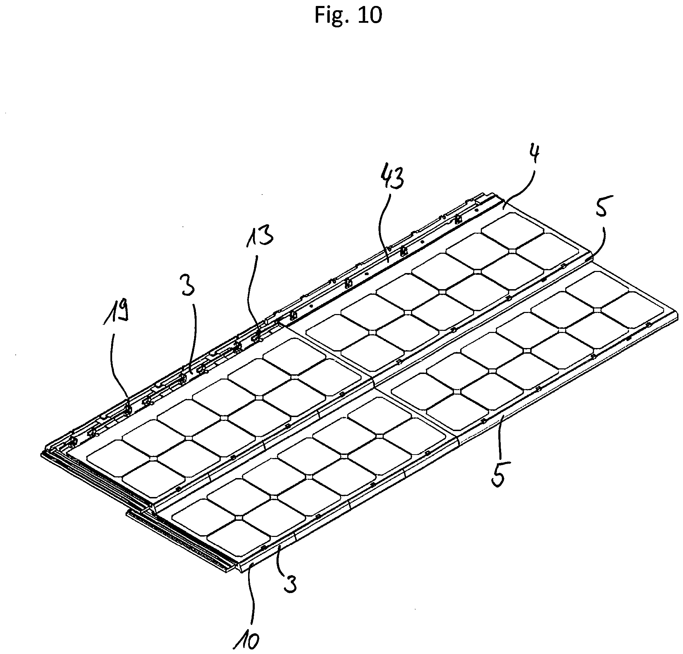

In Fig. 10 ist eine Anordnung mehrerer Solardachplattensysteme gezeigt, wobei zu erkennen ist, dass die Verbindungsleitungen 25 und Kabelführungen 33 durch die darüber liegenden Solardachplattensysteme bedeckt und damit vor Witterungseinflüssen geschützt sind. Des Weiteren ist ein Abdeckelement 43, vorzugsweise in Form einer Dichtung, so z.B. in Form einer Gummidichtung vorgesehen, durch die das System zusätzlich abgedichtet ist. Mit den erfindungsgemäßen Solardachplattensystemen ergibt sich eine Anordnung in Doppeldachdeckung. Bei einer entsprechenden Form eines Solarmoduls 4 ist es auch möglich, eine Dreifachdeckung bereitzustellen, wobei dann die Solarzellen 26 des Solarmoduls 4 nicht durch darüberliegende Dachplattensysteme bedeckt sein sollten.

Links- und/oder rechtsseitig der Solardachplattensysteme kann zusätzlich ein Abdeckblech vorgesehen sein, so dass seitlich unter die Solarmodule 4 keine Flüssigkeit eintritt und zusätzlich ein Schutz vor Flugfeuer bereitgestellt ist. Dieses Abdeckblech kann dabei einen oder mehrere Lüftungsdurchtritte besitzen, um die Solarmodule 4 auf ihrer den Dachplatten 3 zugewandten Seite zu hinterlüften und/oder zu kühlen.

Besonders vorteilhaft am Solardachplattensystem gemäß der vorliegenden Erfindung ist es, dass alle Montage- und Verkabelungsarbeiten oberhalb der Dachlatten und der Sparren erfolgt und somit kein Durchtritt durch die Dachhaut erforderlich ist. Das Solarmodul 4 kann im Falle einer Reparatur oder einer Revision sehr leicht aus den Dachplatten 3 entnommen werden, ohne ggfs. sogar verschraubte Dachplatten 3 von der Dachlattung lösen zu müssen. Aufgrund der dachintegrierten Technik bleibt auch der architektonische Eindruck des Gebäudes besser erhalten. Das System lässt sich beliebig in bereits bestehende (bereits bedeckte) Dächer integrieren und somit nachrüstbar.

### Bezugszeichenliste

- 1: Oberseite
- 2: Unterseite
- 3: Dachplatte
- 4: Solarmodul
- 5: Profilschiene
- 6: Modulaufnahme
- 7: Kante (der Profilschiene zugewandt)
- 8: Dachplattenaufnahme
- 9: Profilklammer
- 10: Klammerabschnitt
- 11: Auflageabschnitt
- 12: Bügelabschnitt
- 13: Klemme
- 14: Kante (der Profilschiene abgewandt)
- 15: Klemmenaufnahme
- 16: Dachplattenabschnitt
- 17: Modulabschnitt
- 18: Steg
- 19: Führungsglied
- 20: Führungsaufnahme
- 21: Auflageblock
- 22: Anschlagglied
- 23: Auflagestruktur
- 24: Führungsstreben
- 25: Verbindungsleitungen
- 26: Solarzellen
- 27: Anschlussblock
- 28: Ausnehmung (an Profilschiene)
- 29: Grundstrebe
- 30: Sicherungsabschnitt
- 31: Klemmlappen
- 32: Ausnehmung (an Klemme)
- 33: Kabelführung
- 34: Kabeldurchtritt
- 35: Stützelemente
- 36: Anschlagsteg
- 37: Wandung
- 38: Dachplattenstegabschnitt
- 39: Buchse
- 40: Sicherungsstift
- 41: Durchtritt
- 42: Fuß / Füße
- 43: Abdeckelement
- 44: Schraube
- 61-63: Abkantungen der Modulaufnahme
- 81-84: Abkantungen der Dachplattenaufnahme

## Patentansprüche

1. Solardachplattensystem zur Verlegung auf einer geneigten Fläche, vorzugsweise auf einem einen Dachfirst und eine Dachtraufe aufweisenden Dach, mit mindestens zwei eine Oberseite (1) und eine Unterseite (2) aufweisenden Dachplatten (3) und mit einem sich über die Oberseiten (2) der Dachplatten (3) erstreckenden und an diesen befestigbaren Solarmodul (4), wobei eine die Dachplatten (3) miteinander verbindende Profilschiene (5) vorgesehen ist, welche mindestens eine Modulaufnahme (6) zur Aufnahme einer Kante (7) des Solarmoduls (4), vorzugsweise einer der Dachtraufe oder dem Dachfirst zugewandten Kante (7) des Solarmoduls (4) aufweist,
wobei die Modulaufnahme (6) aus einem Bügelabschnitt (12) und einem Auflageabschnitt (11) gebildet ist, wobei die Profilschiene (5) mindestens eine als eine Profilklammer (9) mit mehreren Abkantungen (81, 82, 83, 84) gebildete Dachplattenaufnahme (8) zur Aufnahme von mindestens einer der Dachplatten (3) aufweist,
wobei die Dachplatten (3) einen von der Profilklammer (9) umgreifbaren
Klammerabschnitt (10) aufweisen, und
wobei sich an den Auflageabschnitt (11) ein Sicherungsabschnitt (30) in Form einer (84) der mehreren Abkantungen (81, 82, 83, 84) anschließt, der dem Hintergreifen hinter den Klammerabschnitt (10) der Dachplatte (3) dient.

2. Solardachplattensystem nach Anspruch 1, **dadurch gekennzeichnet, dass** der Auflageabschnitt (11) der mindestens einen Modulaufnahme (6) einteilig mit der Profilklammer (9) gebildet ist.

3. Solardachplattensystem nach einem der Ansprüche 1 bis 2, **dadurch gekennzeichnet, dass** eine zur Anzahl an Dachplatten (3) korrespondierende Anzahl an Dachplattenaufnahmen (8) vorgesehen ist.

4. Solardachplattensystem nach einem der Ansprüche 1 bis 3, **dadurch gekennzeichnet, dass** mindestens eine Klemme (13) vorgesehen ist zur Sicherung einer der Profilschiene (5) abgewandten Kante (14) des Solarmoduls (4) an mindestens einer der Dachplatten (3).

5. Solardachplattensystem nach Anspruch 4, **dadurch gekennzeichnet, dass** an der Oberseite (1) von mindestens einer der Dachplatten (3) mindestens eine Klemmenaufnahme (15) angeordnet ist zur Sicherung der mindestens einen Klemme (13) an einer der Dachplatten (3).

6. Solardachplattensystem nach Anspruch 5, **dadurch gekennzeichnet, dass** die Klemme (13) einen in der Klemmenaufnahme (15) gesicherten Dachplattenabschnitt (16) und einen mit dem Solarmodul (4) wechselwirkenden Modulabschnitt (17) aufweist.

7. Solardachplattensystem nach Anspruch 6, **dadurch gekennzeichnet, dass** der Dachplattenabschnitt (16) mittels einer Pressverbindung in der Klemmenaufnahme (15) gesichert ist.

8. Solardachplattensystem nach Anspruch 7, **dadurch gekennzeichnet, dass** die Klemme (13) im Querschnitt z-förmig oder stufenförmig gebildet ist mit einem den Dachplattenabschnitt (16) und den Modulabschnitt (17) verbindenden Steg (18).

9. Solardachplattensystem nach einem der Ansprüche 1 bis 8, **dadurch gekennzeichnet, dass** mindestens eine der Dachplatten (3) an seinem durch das Solarmodul (4) nicht bedeckten Bereich mindestens ein Führungsglied (19) aufweist.

10. Solardachplattensystem nach Anspruch 9, **dadurch gekennzeichnet, dass** die Dachplatten (3) an ihrer Unterseite (2) mindestens eine Führungsaufnahme (20) zur Aufnahme des Führungsglieds (19) der nächst tiefer angeordneten Dachplatte (3) aufweisen.

## Claims

1. A solar roof panel system for laying on an inclined surface, preferably on a roof having a roof ridge and a roof eaves, with at least two roof panels (3) having an upper side (1) and an underside (2) and with a solar module (4) extending over the upper sides (2) of the roof panels (3) and attachable thereto, wherein a profiled rail (5) is provided which connects the roof panels (3) to one another and which has at least one module holder (6) for holding an edge (7) of the solar module (4), preferably an edge (7) of the solar module (4) facing the roof eaves or the roof ridge, wherein the module holder (6) is formed from a bracket section (12) and an support section (11), wherein the profile rail (5) has at least one roof panel holder (8) formed as a profile clamp (9) with plurality of folded edges (81, 82, 83, 84) for holding at least one of the roof panels (3), wherein the roof panels (3) have a clamp section (10) which can be embraced by the profile clamp (9), and wherein the support section (11) is adjoined by a securing section (30) in the form of one (84) of the plurality of folded edges (81, 82, 83, 84), which serves to engage behind the clamp section (10) of the roof panel (3).

2. The solar roof panel system according to claim 1, **characterized in that** the support section (11) of the at least one module holder (6) is formed in one piece with the profile clamp (9).

3. The solar roof panel system according to any one of claims 1 to 2, **characterized in that** a number of roof panel holders (8) corresponding to the number of roof panels (3) is provided.

4. The solar roof panel system according to any one of claims 1 to 3, **characterized in that** at least one clamp (13) is provided for securing an edge (14) of the solar module (4) facing away from the profile rail (5) to at least one of the roof panels (3).

5. The solar roof panel system according to claim 4, **characterized in that** at least one clamp receptacle (15) is arranged on the upper side (1) of at least one of the roof panels (3) for securing the at least one clamp (13) to one of the roof panels (3).

6. The solar roof panel system according to claim 5, **characterized in that** the clamp (13) has a roof panel section (16) secured in the clamp receptacle (15) and a module section (17) interacting with the solar module (4).

7. The solar roof panel system according to claim 6, **characterized in that** the roof panel section (16) is secured in the clamp receptacle (15) by means of a press connection.

8. The solar roof panel system according to claim 7, **characterized in that** the clamp (13) has a Z-shaped or stepped cross-section with a web (18) connecting the roof panel section (16) and the module section (17).

9. The solar roof panel system according to any one of claims 1 to 8, **characterized in that** at least one of the roof panels (3) has at least one guide member (19) on its area not covered by the solar module (4).

10. The solar roof panel system according to claim 9, **characterized in that** the roof panels (3) have at least one guide receptacle (20) on their underside (2) for receiving the guide member (19) of the next lower roof panel (3).

## Revendications

1. Système de plaques de toiture solaire pour la pose sur une surface inclinée, de préférence sur une toiture présentant un faîte et un avant-toit, avec au moins deux plaques de toiture (3) présentant un côté supérieur (1) et un côté inférieur (2) et avec un module solaire (4) s'étendant au-dessus des côtés supérieurs (2) des plaques de toiture (3) et pouvant être fixé à celles-ci, dans lequel est prévu un rail profilé (5) reliant les plaques de toiture (3) les unes aux autres, lequel rail présente au moins un logement de module (6) pour la réception d'un bord (7) du module solaire (4), de préférence d'un bord (7) tourné vers l'avant-toit ou le faîte du module solaire (4),
dans lequel le logement de module (6) est formé à partir d'une section d'étrier (12) et d'une section d'appui (11), dans lequel le rail profilé (5) présente au moins un logement de plaque de toiture (8) formé comme une pince profilée (9) avec plusieurs plis (81, 82, 83, 84) pour la réception d'au moins une des plaques de toiture (3),
dans lequel les plaques de toiture (3) présentent une section de pince (10) pouvant être enveloppée par la pince profilée (9), et dans lequel une section de fixation (30) se raccorde à la section d'appui (11) sous la forme d'un (84) des plusieurs plis (81, 82, 83, 84), section qui sert à venir en prise derrière la section de pince (10) de la plaque de toiture (3).

2. Système de plaques de toiture solaire selon la revendication 1, **caractérisé en ce que** la section d'appui (11) de l'au moins un logement de module (6) est formée d'un seul tenant avec la pince profilée (9).

3. Système de plaques de toiture solaire selon l'une quelconque des revendications 1 à 2, **caractérisé en ce qu'**un nombre de logements de panneau de toiture (8) correspondant au nombre de plaques de toiture (3) est prévu.

4. Système de plaques de toiture solaire selon l'une quelconque des revendications 1 à 3, **caractérisé en ce qu'**au moins une borne (13) est prévue pour la fixation d'un bord (14) éloigné du rail profilé (5) du module solaire (4) à au moins une des plaques de toiture (3).

5. Système de plaques de toiture solaire selon la revendication 4, **caractérisé en ce qu'**au moins un logement de borne (15) est agencé au niveau du côté supérieur (1) d'au moins une des plaques de toiture (3) pour la fixation de l'au moins une borne (13) à une des plaques de toiture (3).

6. Système de plaques de toiture solaire selon la revendication 5, **caractérisé en ce que** la borne (13) présente une section de plaque de toiture (16) fixée dans le logement de borne (15) et une section de module (17) interagissant avec le module solaire (4).

7. Système de plaques de toiture solaire selon la revendication 6, **caractérisé en ce que** la section de plaque de toiture (16) est fixée au moyen d'une liaison par pressage dans le logement de borne (15).

8. Système de plaques de toiture solaire selon la revendication 7, **caractérisé en ce que** la borne (13) est formée en section transversale en forme de z ou de manière étagée avec une nervure (18) reliant la section de plaque de toiture (16) et la section de module (17).

9. Système de plaques de toiture solaire selon l'une quelconque des revendications 1 à 8, **caractérisé en ce qu'**au moins une des plaques de toiture (3) présente au moins un organe de guidage (19) au niveau de sa zone non recouverte par le module solaire (4).

10. Système de plaques de toiture solaire selon la revendication (9), **caractérisé en ce que** les plaques de toiture (3) présentent au niveau de leur côté inférieur (2) au moins un logement de guidage (20) pour la réception de l'organe de guidage (19) de la prochaine plaque de toiture (3) agencée en dessous.
